# EUROPEAN PATENT SPECIFICATION

(11) **EP 3 450 323 B1**
(45) Date of publication and mention of the grant of the patent: **16.03.2022**
(21) Application number: 18189454.4
(22) Date of filing: 27.05.2013
(51) Int. Cl.: B64F 1/20

(54) **HIGH INTENSITY AIRFIELD LIGHTING SYSTEM**
SYSTEM ZUR HOCHINTENSIVEN FLUGFELDBELEUCHTUNG
SYSTÈME D'ÉCLAIRAGE DE TERRAIN D'AVIATION À HAUTE INTENSITÉ

(43) Date of publication of application: 06.03.2019
(62) Divisional of application: 13169318.6
(73) Proprietor: Induperm A/S, 4800 Nykøbing Falster (DK)
(72) Inventor: Schönert, Oliver, 59757 Arnsberg (DE)
(74) Representative: van Trier, Norbertus Henricus Gerardus

(56) References cited:
- WO-A1-2011/134984
- US-A1- 2007 164 875
- US-A1- 2010 091 507
- US-B1- 7 513 653

## Description

### Field of the invention

The present patent application relates to high intensity airfield lighting system, e. g. a runway edge lighting system or a taxiway lighting system, comprising a main body, a dome securable to the main body, wherein the dome is designed for light transmission and at least partially transparent, at least one light unit covered by the dome and comprising at least one first lighting element fixed to a carrier of the light unit, at least one first optical element designed to receive light from the first lighting element and to emit the light received in a main light-exit direction, and a support for the at least one first optical element, and a heat sink for dissipating heat generated by the first lighting element.

### Description of the related art

GB 164 436 A discloses a high intensity airfield lighting system with a main body and a dome secured to the main body. A first light unit is covered by the dome and fixed to the carrier. A reflector is used to reflect light of the first light unit to a main light exit direction. A second light unit and a second optical element are provided, wherein the light of the second light unit is emitted circular within a horizontal light-exit plane.

In WO 2011/134984 A1 an airfield lighting system is disclosed which comprises a main body built to carry two light units on opposite sides of the body. Each light unit comprises at least one lighting element, a circuit broad for the lighting element and a heat sink built for dissipating heat generated by the light elements. The airfield lighting device is built to emit light in two opposite light-exit directions and utilizes light emitting diodes as light sources. It can be used as airfield runway edge, and, threshold and approach lighting system. Due to light emitting into two well defined light-exit directions the lighting system is not suitable for use as an omnidirectional airfield lighting system. US 2007/0164875 and US 2010/0091507 A1 disclose further airfield lighting systems comprising a heat sink and light elements attached to and in thermal contact with the heat sink.

### Summary of the invention

The problem to be solved in this invention is to provide an airfield lighting system which can be used to emit light in well-defined light-exit direction and as an omnidirectional airfield lighting system. The lighting system should be built as modular lighting system in order to realize either one of the lighting functions but both of them. Solutions of the problem are described in the independent claims. The dependent claims relate to further improvements of the invention.

The invention is defined by the claim 1, advantageous embodiments are subjects of the dependent claims.

The lighting system has at least one second lighting element and at least one second optical element. The second optical element receives the light of the second lighting element and emits the light received at least semicircular within a light-exit plane.

The inventive lighting system has a very compact design which allows the realization of two different lighting functions. First, light emitted by the first lighting elements passes through the first optical elements and is emitted in a main light-exit direction allowing the lighting system to be used as runway edge lighting system, taxiway lighting system or the like. Second, light of the second lighting element is emitted into a light-exit plane allowing the lighting system to be used as omnidirectional lighting system as well. As one or both of the lighting functions can be realized within the lighting system it provides high degree of flexibility with respect to the field of application of the lighting system. The lighting system is built for the use of modern high power light emitting diodes. The heat sink provided dissipates heat generated by the lighting elements of the light unit.

The heat sink comprises a first heat sink section carrying the light unit and a second heat sink section carrying an electronic circuit for powering and driving the first lighting element and/or the second lighting element. By providing a heat sink with at least two heat sink sections each section can be individually designed with respect to the requirements of the light unit and the electronic circuit. E. g. the dissipating capacity of each heat sink section can be adjusted to the heat generated by the electronic circuit or the lighting elements.

In a preferred embodiment of the invention the at least one second lighting element is fixed to the heat sink and/or to the carrier of the light unit. Fixing the second lighting element to the heat sink allows sufficient heat dissipation. The heat sink used to dissipate heat generated by the first lighting element can also be used to dissipate heat generated by the second lighting element. Fixing the second lighting element of the carrier of the light unit allows a compact architecture of the light unit and makes assembly easy and fast. E. g. the carrier assembly could be done within a single production step as well as mounting of the assembled carrier to the heat sink. Moreover, the effort for wiring the lighting elements is reduced.

According to a further embodiment of the invention the electronic circuit for powering and driving the first lighting element and/or the second lighting element is provided and mounted to the heat sink in such a way that heat generated by the electronic circuit is dissipated by the heat sink. Therefore, the heat sink is used to dissipate heat generated by both the lighting elements and the electronic circuit. This reduces cost and allows for an additional reduction of the size of the lighting system.

According to a further embodiment of the invention the at least one second lighting element is in an elevated position with respect to the at least one first lighting element within an upright position of the lighting system. E. g. the second lighting element can be mounted on the top of the heat sink with the first lighting element been mounted underneath the second lighting element. The elevate position of the second lighting element allows good optical conditions for the omnidirectional lighting function while the position of the first lighting elements has no negative effect on the light emission in the main light-exit direction. Therefore, both lighting functions can be realized within one lighting system.

In an operating position of the lighting system the first heat sink section has a vertical orientation with the two opposed installation surfaces being arranged symmetrical to a vertical center axis of the first heat sink section while the second heat sink section is orientated horizontally. The electronic circuit is mounted to a bottom side of the horizontally orientated second heat sink section. The first heat sink section might be built as a wedge-shaped heat sink section with the second lighting element being mounted on two different sides of the tip of the wedge-shaped heat sink section and with the installation surfaces for the light units being built on two plain surfaces of the wedge. The wedge-shaped first heat sink section makes it easy to emit the light of the first lighting element to the main light-exit direction which is in an upgrade position with respect to the light-exit plane of the second lighting elements.

At least two second lighting elements and corresponding second optical elements can be provided and arranged in such a way that light emitted by the second lighting elements and passed through the second optical elements completely is emitted into the light-exit plane. Advantageously the omnidirectional lighting function can be provided with as few as two second lighting elements which are in elevated position to the heat sink and/or the first lighting elements. The vertical distance of the second lighting elements should be small to allow good illumination of the light-exit plane. E. g. the vertical distance should be 5.0 cm or less, preferred 3.5 cm or less.

According to a further embodiment of the invention the main body is part of the heat sink. The integrative of the main body into the heat sink improves heat dissipation. E. g. the main body may provide cooling fins or the like to enlarge the outside surface. Moreover, a heat sink comprising the main body as well as the first heat sink section and the second heat sink section can be built as a single solid body in a cost efficient way, e. g. by casting.

According to the invention the lighting system comprises a drainpipe and a hollow in the bottom section of the heat sink for draining off entrapped moisture. The drainpipe can be built as a siphon-shaped drainpipe. Providing the hollow and/or the drainpipe allows protection of the electronic circuit from getting into contact with moisture or the like. The electronic circuit may be built as a sealed electronic circuit in order to provide even better protection from moisture input. Therefore, the lighting system has a moisture proof design with high reliability and improved durability. Even if the dome is damaged and water from outside can enter the lighting system failures can be prevented. Moreover, a heater can be provided which is integrated into the electronic circuit in order to allow reliable function even at cold temperature and rough environmental conditions. The heater heats the heat sink in order to defreeze the functional components of the lighting system, e. g. the light units and the dome. Another high intensity airfield lighting system comprises a main body, a dome securable to the main body, wherein the dome is designed for light transmission and at least partially transparent. The high intensity airfield lighting system further comprises at least one light unit covered by the dome and comprising at least one first lighting element fixed to a carrier of the light unit, at least one first optical element designed to receive light from the first lighting element and to emit the light received into a main light-exit direction, and a support for the at least one first optical element. The high intensity airfield light further comprises a heat sink for dissipating heat generated by the first lighting element. At least one second lighting element and at least one second optical element are provided. The second optical element receives the light of the second lighting element and emits the light received at least semicircular within a light-exit plane. It may have the same additional features as defined in the characterizing portion of claim 1 and as well those of the dependent claims.

### Brief Description of Drawings

The present invention will become more fully understood from the detailed description given hereinbelow and the accompanying drawings which are given by way of illustration only, and thus, are not limited to the present invention.

In the drawings:
- Fig. 1: shows a first embodiment of the inventive lighting system;
- Fig. 2: shows an exploded view of the lighting system of fig. 1;
- Fig. 3: shows an exploded view of a light unit of the lighting system of fig. 1;
- Fig. 4: shows a section of view of the lighting system of fig. 1;
- Fig. 5: shows a detailed view on a hollow and a drainpipe of the lighting system f fig. 1;
- Fig. 6: shows a cross-sectional view on the lighting system of fig. 1; and
- Fig. 7: shows a second embodiment of the inventive lighting system.

### Detailed description of the drawings

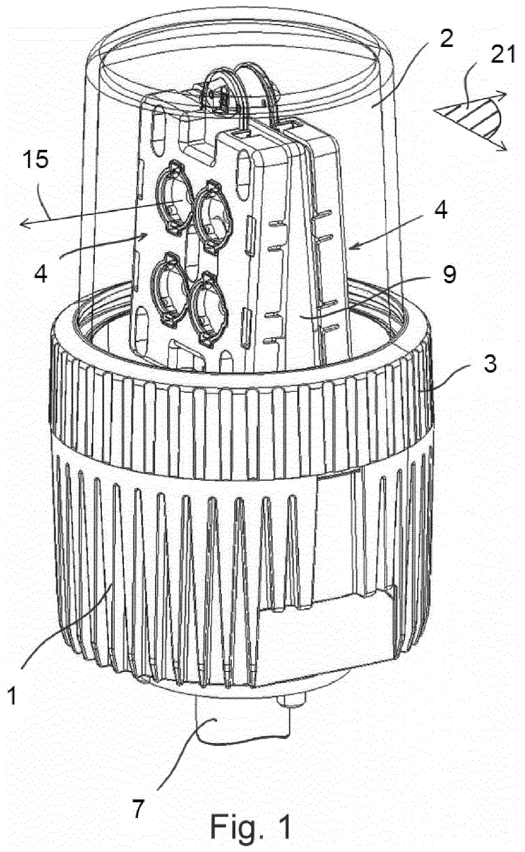

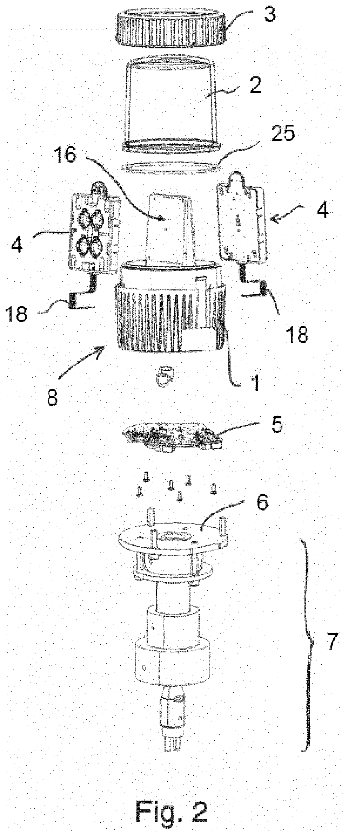

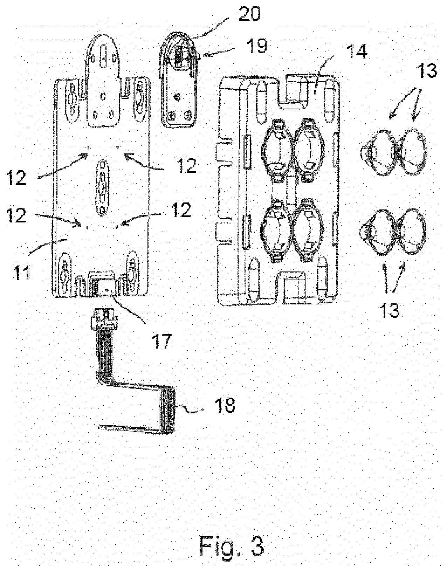

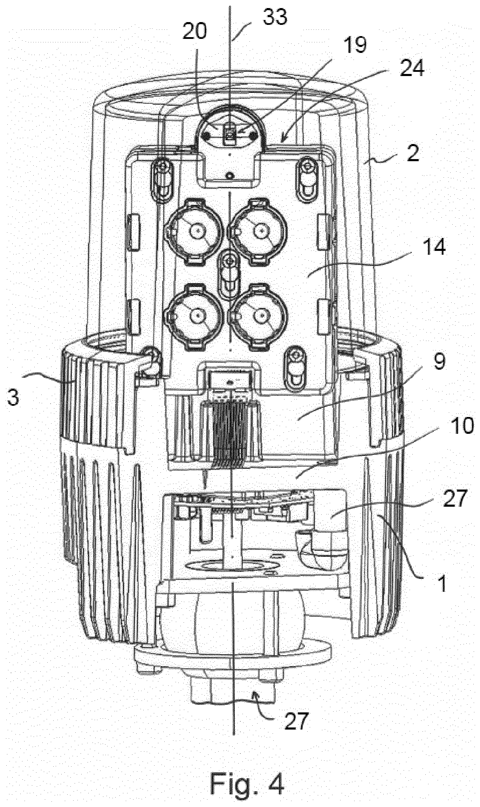

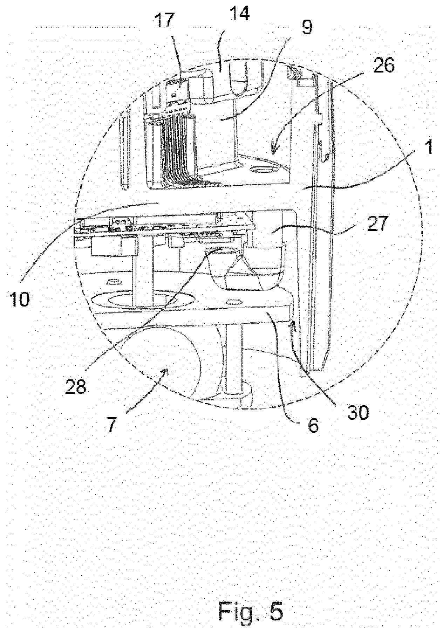

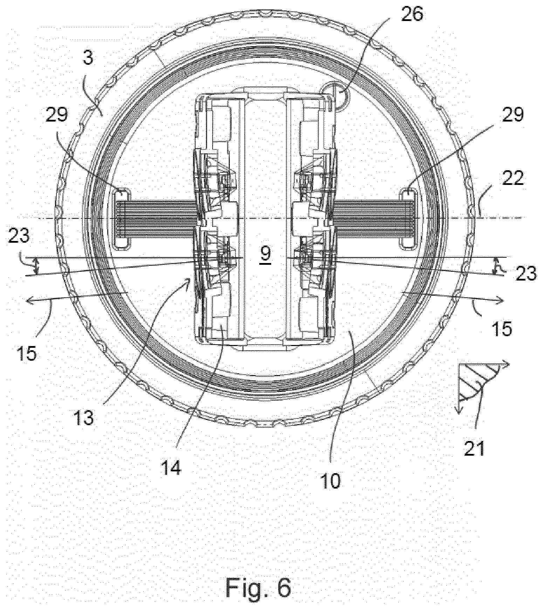

A first embodiment of the inventive lighting system is shown in the fig. 1 to 6. The main components of the lighting system are a main body 1, a dome 2, a fixing ring 3, two light units 4, an electronic circuit 5, an adapter plate 6 and a socket 7. The main body 1 is part of the heat sink 8 which also consists of a first heat sink section 9 carrying the two light units 4 and a second heat sink section 10 carrying the electronic circuit 5.

Each light unit 4 comprises a carrier 11 carrying four light emitting diodes as first lighting elements 12, four first optical elements 13 and a support 14 for the first optical elements 13. The first lighting elements 12 are mounted to the carrier 11 of the light unit 4. The support 14 is also fixed to the carrier 11. The first optical elements 13 are arranged in such a way that light emitted by the first lighting elements 12 is received by the first optical elements 13 and emitted by the first optical elements 13 in a main light-exit direction 15 after passing the first optical elements 13.

The lighting units 4 are fixed to the first heat sink section 9 which is in a central position with respect to the main body 1 of the heat sink 8 and covered by the dome 2. The first heat sink section 9 is designed as a wedge-shaped heat-sink section 9 carrying the light units 4. With respect to the light units 4 two opposed plain surfaces of the wedge-shaped heat sink section 9 define two installation surfaces 16 which are in plain contact with the carrier 11 of the lighting units 4.

The carrier 11 also holds a connector plug 17 for connecting the light emitting diodes 12 and the electronic circuit 5 via cable 18.

Heat generated by the light units 4 is dissipated by the heat sink 8. Moreover, the heat sink 8 dissipates heat generated by the electronic circuit 5.

A second lighting element 19 and a second optical element 20 assigned to the second lighting element 19 is also fixed to the carrier 11. Light emitted by the second lighting element is received by the second optical element 20 and emitted primarily into a light-exit plane 21 which has horizontal orientation with the lighting system being in a vertical operating position. Light refracted by the second lighting element 19 allows the lighting system to realize an omnidirectional lighting function. A vertically spreading angle of the light emitted by the second optical element basically varies between -1° and +16° with respect to the light-exit plane with a small portion of the light being emitted upwards. The horizontal spreading angle of the second optical element 20 varies from -95° to +95° with respect to a horizontal center axis 22 of the lighting system.

In order to emit light into the whole light-exit plane 21 two second lighting elements 19 are provided on two opposed sides of the wedge-shaped first heat sink section 9. The second lighting elements 19 are located close to the tip 24 of the wedge-shaped heat sink section 9 and in an elevated position with respect to the tip 24 of the wedge-shaped heat sink section 9 and the first lighting elements 12 allowing the light emission without interference with the light units 4 or the heat sink 8. A horizontal distance of the two lighting elements 19 is less than 3.5 cm.

With the two light units 4 and the two second lighting elements 19 the lighting system provides two light functions. The light units 4 emit light into the main light-exit direction 15. The second lighting elements 19 emit light into the light-exit plane 21 allowing an omnidirectional lighting function to be realized. Depending on individual requirements on the airfield the modular design of the lighting systems allows to include both lighting functions or either one of them. Moreover, the main light-exit direction 15 can vary depending on the design of the light units 4. By changing the support 14 of the light unit 4 an angle 23 between the main light-exit direction 15 and the horizontal center axis 22 of the lighting system can be adopted. Typical light-exit angles 23 are 0°, 3.5° and 4.5°. The angles 23 are realized by varying the orientation of the first optical elements 13 within the support 14. Therefore, the main light-exit direction 15 can be chosen by changing the support 14 of the light unit 4 while all other elements (e. g. carrier 11, first lighting element 12, first optical element 13, and connector plug 17) remain unchanged.

The dome 2 of the lighting system can be made of plastic or glass. It is at least partially transparent and allows light emitted by the lighting elements 12, 19 to pass through. It is realized without lenses or other optical elements.

The fixing ring 3 can be locked to the main body 1 without a tool. The fixing ring 3 and the main body 1 are connected by bayonet means. In order to avoid moisture draining into the lighting system a sealing 25 is provided between the main body 1 and the dome 2.

The electronic circuit 5 is fixed to the second heat sink section 10 which has a mainly horizontal orientation. The electronic circuit 5 is mounted to a bottom side of the section heat sink section 10. The cable 18 connecting the light units 4 and the electronic circuit 5 passes through a slot 29 in the second heat sink section 10. The electronic circuit 5 is sealed with the sealing not been shown in the fig. 1 to 6.

Due to the rough environmental conditions on an airfield the ingress of moisture cannot be avoided completely. E. g. the dome can be damaged. Therefore, the mainly horizontal orientated second heat sink section 10 provides a hollow 26 allowing water to pass through. In order to make sure that water passing the hollow 26 does not damage the electronic circuit 5 a drainpipe 27 is provided. The drainpipe 27 is connected to the hollow 26. It is realized as a siphon-type drainpipe 27 with an opening 28 in an upward orientation facing the electronic circuit 5. If moisture enters the lighting system due to damages of the dome 2 or the like it passes through the hollow 26 and enters the drainpipe 27 without getting into contact to the electronic circuit 5.

The adapter plate 6 is designed to connect the heat sink 8 with a socket 7. The design of the adapter plate 6 allows water passing through the drainpipe 27 to exit the lighting system via an annular gap 30 built between the main body 1 and the adapter plate 6. Moreover, the adapter plate 6 allows the socket 7 to be connected to different types of main bodies 1 or heat sinks 8.

The optical elements 13, 20 are realized as lenses in an alternative embodiment of the invention which is not shown in the figures. Any other suitable refracting or reflecting optics could also be used to realize the optical elements 13, 20.

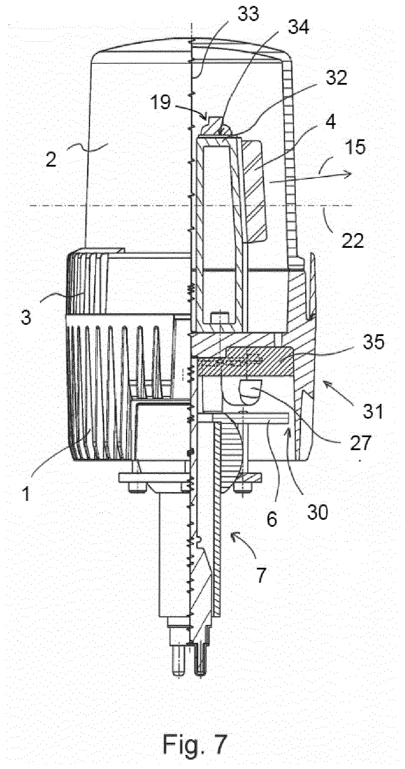

Fig. 7 shows a second embodiment of the invention with a slightly different design. A heat sink 8 is realized as a multipart heat sink 8. It comprises a first heat sink component 31 with a main body 1 and the horizontal orientated heat sink section 10. Furthermore, the heat sink 8 comprises two second heat sink components 32, carrying the light units 4. The two second heat sink components 32 are fixed to the first heat sink component 31 by means of screws. The second heat sink components 32 are in an upward position and have a vertical orientation. They are symmetrical arranged with respect to a vertical center axis 33 of the lighting system. The light units 4 are fixed to two opposed installation surfaces 16 of the second heat sink component 32. The second lighting elements 19 are mounted to a front edge 34 of the heat sink component 32. The electronic circuit 5 is mounted to a bottom side of the second heat sink section 10. A sealing 35 for the electronic circuit 5 is provided protecting the electronic circuit 5.

In both embodiments the light units 4 are realized as modular light units which are changeably mounted to the heat sink 8.

### List of reference numerals

- 1: main body
- 2: dome
- 3: fixing ring
- 4: light unit
- 5: electronic circuit
- 6: adapter plate
- 7: socket
- 8: heat sink
- 9: first heat sink section
- 10: second heat sink section
- 11: carrier
- 12: first lighting element
- 13: first optical element
- 14: support
- 15: main light-exit direction
- 16: installation surface
- 17: connector plug
- 18: cable
- 19: second lighting element
- 20: second optical element
- 21: light-exit plane
- 22: horizontal center axis
- 23: angle
- 24: tip
- 25: sealing
- 26: hollow
- 27: drainpipe
- 28: opening
- 29: slot
- 30: annular gap
- 31: first heat sink component
- 32: second heat sink component
- 33: vertical center axis
- 34: front edge
- 35: sealing

## Claims

1. High intensity airfield lighting system comprising
- a main body (1);
- a dome (2) securable to the main body (1), wherein the dome (2) is designed for light transmission and at least partially transparent;
- at least one light unit (4) having at least one lighting element (12, 19) and at least one optical element (13, 20) designed to receive light from the lighting element (12, 19) and to emit the light received;
- an electronic circuit (5) for powering and driving the lighting elements (12, 19) of the light unit (4) which is in distant position with respect to the light unit (4); and
- a common heat sink (8), wherein the common heat sink (8) comprises a first heat sink section (9) carrying the at least one light unit (4) and a second heat sink section (10) carrying the electronic circuit (5) and wherein the common heat sink (8) is provided for cooling both the least one lighting element (12, 19) and the electronic circuit (5) and/or wherein the electronic circuit (5) and the least one lighting element (12, 19) are mounted to the common heat sink (8),
**characterized in that**
a hollow (26) in the second heat sink section (10) and a drainpipe (27) connected to the hollow (26) are provided for draining off entrapped moisture.

2. Lighting system of claim 1 **characterized in that** the at least one second lighting element (19) is mounted to the heat sink (8) and/or to the carrier (11) of the light unit (4).

3. Lighting system of one of the claims 1 or 2 **characterized in that** an electronic circuit (5) for powering and driving the first lighting element (12) and/or the second lighting element (19) is provided and mounted to the heat sink (8) in such a way that heat generated by the electronic circuit (5) is dissipated by the heat sink (8).

4. Lighting system of one of the claims 1 to 3 **characterized in that** at least two light units (4) are provided with the two light units (4) being mounted to two opposed installation surfaces (16) of the heat sink (8).

5. Lighting system of one of the claims 1 to 4 **characterized in that** in an operating position of the lighting system
- the light-exit plane (21) is in a horizontal orientation; and/or
- an angle (23) less than 25° is built between the light-exit plane (21) and the main light-exit direction (15); and/or
- the at least one second lighting element (19) is in an elevated position with respect to the at least one first lighting element (12); and/or
- the first heat sink section (9) is in a mainly vertical orientation with the two opposed installation surfaces (16) being arranged symmetrically to a vertically extended center axis of the first heat sink section (9); and/or
- the second heat sink section (10) is in a mainly horizontal orientation with the electronic circuit (5) being mounted to a bottom side of the second heat sink section (10).

6. Lighting system of one of the claims 1 to 5 **characterized in that** at least two second lighting elements (19) and at least two second optical elements (20) are provided which are arranged in such a way that the light emitted by the second lighting elements (19) and passed through the second optical elements (20) completely illuminates the light-exit plane (21).

7. Lighting system of one of the claims 1 to 6 **characterized in that** the drainpipe (27) is a siphon-shaped drainpipe (27).

8. Lighting system of one of the claims 1 to 7 **characterized in that** the first optical element (13) is formed as a refracting optical element (13) and/or that the second optical element (20) is formed as a refracting optical element (20) or as a reflecting optical element (20).

9. Lighting system of one of the claims 1 to 8 **characterized in that** the vertically oriented first heat sink section (9) is built as a wedge-shaped heat sink section (9),
- with the at least two second lighting elements (19) being mounted on two different sides of the tip of the wedge-shaped heat sink section (9); and/or
- with the at least two second lighting elements (19) being in an elevated position with respect to the tip of the wedge-shaped heat sink (8); and/or
- with the two installation surfaces (16) being built as plain surfaces of the wedge.

## Patentansprüche

1. Ein Hochintensitätsflugfeldbeleuchtungssystem, das folgende Merkmale aufweist:
- einen Hauptkörper (1);
- eine Kuppel (2), die an dem Hauptkörper (1) anbringbar ist, wobei die Kuppel (2) zur Lichttransmission gestaltet ist und zumindest teilweise transparent ist;
- zumindest eine Lichteinheit (4), die zumindest ein Lichtelement (12, 19) und zumindest ein optisches Element (13, 20) aufweist, das dazu gestaltet ist, Licht aus dem Beleuchtungselement (12, 19) zu empfangen und das empfangene Licht zu emittieren;
- eine elektronische Schaltung (5) zur Leistungsversorgung und zum Ansteuern der Beleuchtungselemente (12, 19) der Lichteinheit (4), die sich an einer entfernten Position in Bezug auf die Lichteinheit (4) befindet; und
- eine gemeinsame Wärmesenke (8), wobei die gemeinsame Wärmesenke (8) einen ersten Wärmesenkenbereich (9), der die zumindest eine Lichteinheit (4) trägt, und einen zweiten Wärmesenkenbereich (10) aufweist, der die elektronische Schaltung (5) trägt, und wobei die gemeinsame Wärmesenke (8) zum Kühlen des zumindest einen Beleuchtungselements (12, 19) und der elektronische Schaltung (5) bereitgestellt ist, und/oder wobei die elektronische Schaltung (5) und das zumindest eine Beleuchtungselement (12, 19) an der gemeinsamen Wärmesenke (8) montiert sind,
**dadurch gekennzeichnet, dass**
ein Hohlraum (26) in dem zweiten Wärmesenkenbereich (10) und ein mit dem Hohlraum (26) verbundenes Abflussrohr (27) zum Abführen eingeschlossener Feuchtigkeit bereitgestellt sind.

2. Beleuchtungssystem gemäß Anspruch 1, **dadurch gekennzeichnet, dass** das zumindest eine Beleuchtungselement (19) an der Wärmesenke (8) und/oder an dem Träger (11) der Lichteinheit (4) montiert ist.

3. Beleuchtungssystem gemäß einem der Ansprüche 1 oder 2, **dadurch gekennzeichnet, dass** eine elektronische Schaltung (5) zur Leistungsversorgung und zum Ansteuern des ersten Beleuchtungselements (12) und/oder des zweiten Beleuchtungselements (19) bereitgestellt ist und an der Wärmesenke (8) derart montiert ist, dass durch die elektronische Schaltung (5) erzeugte Wärme durch die Wärmesenke (8) abgeführt wird.

4. Beleuchtungssystem gemäß einem der Ansprüche 1 bis 3, **dadurch gekennzeichnet, dass** zumindest zwei Lichteinheiten (4) bereitgestellt sind, wobei die zwei Licht-einheiten (4) an zwei gegenüberliegenden Installationsoberflächen (16) der Wärme-senke (8) montiert sind.

5. Beleuchtungssystem gemäß einem der Ansprüche 1 bis 4, **dadurch gekennzeichnet, dass** in einer Betriebsposition des Beleuchtungssystems:
- die Lichtaustrittsebene (21) in einer horizontalen Ausrichtung ist; und/oder
- ein Winkel (23) von weniger als 25° zwischen der Lichtaustrittsebene (21) und der Hauptlichtaustrittsrichtung (15) aufgestellt ist; und/oder
- sich das zumindest eine zweite Beleuchtungselement (19) an einer erhöhten Position in Bezug auf das zumindest eine erste Beleuchtungselement (12) befindet; und/oder
- der erste Wärmesenkenbereich (9) in einer hauptsächlich vertikalen Ausrichtung ist, wobei die zwei gegenüberliegenden Installationsoberflächen (16) symmetrisch zu einer sich vertikal erstreckenden Mittelachse des ersten Wärmesenkenbereichs (9) angeordnet sind; und/oder
- der zweite Wärmesenkenbereich (10) in einer hauptsächlich horizontalen Ausrichtung ist, wobei die elektronische Schaltung (5) an einer Unterseite des zweiten Wärmesenkenbereichs (10) montiert ist.

6. Beleuchtungssystem gemäß einem der Ansprüche 1 bis 5, **dadurch gekennzeichnet, dass** zumindest zwei zweite Beleuchtungselemente (19) und zumindest zwei zweite optische Elemente (20) bereitgestellt sind, die derart angeordnet sind, dass das durch die zweiten Beleuchtungselemente (19) emittierte und durch die zweiten optischen Elemente (20) hindurchgegangene Licht die Lichtaustrittsebene (21) voll-ständig beleuchtet.

7. Beleuchtungssystem gemäß einem der Ansprüche 1 bis 6, **dadurch gekennzeichnet, dass** das Abflussrohr (27) ein siphonförmiges Abflussrohr (27) ist.

8. Beleuchtungssystem gemäß einem der Ansprüche 1 bis 7, **dadurch gekennzeichnet, dass** das erste optische Element (13) als optisches Brechungselement (13) gebildet ist und/oder das zweite optische Element (20) als optisches Brechungselement (20) oder als optisches Reflexionselement (20) gebildet ist.

9. Beleuchtungssystem gemäß einem der Ansprüche 1 bis 8, **dadurch gekennzeichnet, dass** der vertikal ausgerichtete erste Wärmesenkenbereich (9) als keilförmiger Wärmesenkenbereich (9) gebaut ist,
- wobei die zumindest zwei zweiten Beleuchtungselemente (19) auf zwei unter-schiedlichen Seiten der Spitze des keilförmigen Wärmesenkenbereichs (9) montiert sind; und/oder
- wobei sich die zumindest zwei zweiten Beleuchtungselemente (19) in einer erhöhten Position in Bezug auf die Spitze der keilförmigen Wärmesenke (8) befinden; und/oder
- wobei die zwei Installationsoberflächen (16) als ebene Oberflächen des Keils gebildet sind.

## Revendications

1. Système d'éclairage de terrain d'aviation à haute intensité comprenant
- un corps principal (1) ;
- un dôme (2) fixable au corps principal (1), dans lequel le dôme (2) est conçu pour la transmission de lumière et est au moins partiellement transparent ;
- au moins une unité lumineuse (4) présentant au moins un élément d'éclairage (12, 19) et au moins un élément optique (13, 20) conçu pour recevoir de la lumière de l'élément d'éclairage (12, 19) et pour émettre la lumière reçue ;
- un circuit électronique (5) pour l'alimentation et l'entraînement des éléments d'éclairage (12, 19) de l'unité lumineuse (4) qui est dans une position distante par rapport à l'unité lumineuse (4) ; et
- un dissipateur de chaleur commun (8), dans lequel le dissipateur de chaleur commun (8) comprend une première section de dissipateur de chaleur (9) portant l'au moins une unité lumineuse (4) et une deuxième section de dissipateur de chaleur (10) portant le circuit électronique (5) et dans lequel le dissipateur de chaleur commun (8) est prévu pour le refroidissement à la fois de l'au moins un élément d'éclairage (12, 19) et du circuit électronique (5) et/ou dans lequel le circuit électrique (5) et l'au moins un élément d'éclairage (12, 19) sont montés dans le dissipateur de chaleur commun (8),
**caractérisé en ce que**
un creux (26) dans la deuxième section de dissipateur de chaleur (10) et un tuyau de drainage (27) relié au creux (26) sont prévus pour le drainage d'humidité piégée.

2. Système d'éclairage selon la revendication 1 **caractérisé en ce que** l'au moins un deuxième élément d'éclairage (19) est monté dans le dissipateur de chaleur (8) et/ou dans le support (11) de l'unité lumineuse (4).

3. Système d'éclairage selon l'une des revendications 1 ou 2 **caractérisé en ce qu'**un circuit électronique (5) pour l'alimentation et l'entraînement du premier élément d'éclairage (12) et/ou du deuxième élément d'éclairage (19) est prévu et monté dans le dissipateur de chaleur (8) de telle manière que de la chaleur générée par le circuit électronique (5) soit dissipée par le dissipateur de chaleur (8).

4. Système d'éclairage selon l'une des revendications 1 à 3 **caractérisé en ce qu'**au moins deux unités de lumière (4) sont dotées de deux unités lumineuses (4) qui sont montées sur deux surfaces d'installation opposées (16) du dispositif de chaleur (8).

5. Système d'éclairage selon l'une des revendications 1 à 4 **caractérisé en ce que** dans une position opérationnelle du système d'éclairage
- le plan de sortie de lumière (21) est dans une orientation horizontale ; et/ou
- un angle (23) inférieur à 25° est formé entre le plan de sortie de lumière (21) et la direction de sortie de lumière principale (15) ; et/ou
- l'au moins un deuxième élément d'éclairage (19) est dans une position élevée par rapport à l'au moins un premier élément d'éclairage (12) ; et/ou
- la première section de dissipateur de chaleur (9) est dans une orientation principalement verticale avec les deux surfaces d'installation opposées (16) qui sont agencées symétriquement à un axe central étendu verticalement de la première section de dissipateur de chaleur (9) ; et/ou
- la deuxième section de dissipateur de chaleur (10) est dans une orientation principalement horizontale avec le circuit électronique (5) qui est monté dans un côté inférieur de la deuxième section de dissipateur de chaleur (10).

6. Système d'éclairage selon l'une des revendications 1 à 5 **caractérisé en ce qu'**au moins deux deuxièmes éléments d'éclairage (19) et au moins deux deuxièmes éléments optiques (20) sont prévus, lesquels sont agencés de telle manière que la lumière émise par les deuxièmes éléments d'éclairage (19) et passée à travers les deuxièmes éléments optiques (20) illumine complètement le plan de sortie de lumière (21).

7. Système d'éclairage selon l'une des revendications 1 à 6 **caractérisé en ce que** le tuyau de drainage (27) est un tuyau de drainage en forme de siphon (27).

8. Système d'éclairage selon l'une des revendications 1 à 7 **caractérisé en ce que** le premier élément optique (13) est formé comme un élément optique de réfraction (13) et/ou que le deuxième élément optique (20) est formé comme un élément optique de réfraction (20) ou comme un élément optique de réflexion (20).

9. Système d'éclairage selon l'une des revendications 1 à 8 **caractérisé en ce que** la première section de dissipateur de chaleur (9) orientée verticalement est formée comme une section de dissipateur de chaleur en forme de coin (9),
- avec les au moins deux deuxièmes éléments d'éclairage (19) qui sont montés sur deux côtés différents du bout de la section de dissipateur de chaleur en forme de coin (9) ; et/ou
- avec les au moins deux deuxièmes éléments d'éclairage (19) qui sont dans une position élevée par rapport au bout du dissipateur de chaleur en forme de coin (8) ; et/ou
- avec les deux surfaces d'installation (16) qui sont formées comme des surfaces planes du coin.
